# EUROPÄISCHE PATENTSCHRIFT

(11) **EP 1 676 057 B1**
(45) Veröffentlichungstag und Bekanntmachung des Hinweises auf die Patenterteilung: **14.03.2012**
(21) Anmeldenummer: 04790095.6
(22) Anmeldetag: 02.10.2004
(51) Int. Cl.: B60K 23/04, B60K 17/346, B60K 23/08, F16H 48/30

(54) **GETRIEBEVORRICHTUNG UND VERFAHREN ZUM STEUERN UND REGELN EINER GETRIEBEVORRICHTUNG**
TRANSMISSION DEVICE AND METHOD FOR CONTROLLING AND REGULATING A TRANSMISSION DEVICE
SYSTEME DE BOITE DE VITESSES ET PROCEDE DE COMMANDE ET DE REGULATION D'UN TEL SYSTEME

(30) Priorität: 22.10.2003 DE 10348959
(43) Veröffentlichungstag der Anmeldung: 05.07.2006
(73) Patentinhaber: ZF Friedrichshafen AG, 88038 Friedrichshafen (DE)
(72) Erfinder: BAASCH, Detlef, 88048 Friedrichshafen (DE); GUMPOLTSBERGER, Gerhard, 88045 Friedrichshafen (DE); PELCHEN, Christoph, 88069 Tettnang (DE); SCHMOHL, Barbara, 88048 Friedrichshafen (DE); MAIR, Ulrich, 88046 Friedrichshafen (DE); ROSEMEIER, Thomas, 88045 Friedrichshafen (DE)
(74) Vertreter: Zietlow, Karl-Peter
(86) Internationale Anmeldenummer: PCT/EP2004/011028
(87) Internationale Veröffentlichungsnummer: WO 2005/050065

(56) Entgegenhaltungen:
- WO-A1-99/17948
- DE-A1- 10 344 556
- US-A- 4 471 669
- US-A- 5 435 790
- US-B1- 6 206 798
- BESSON B: "DOUBLE EPICYCLE A GLISSEMENT CONTROLE APPLICATION A LA TRACTION DESVEHICULES DOBLE EPICYCLE TO CONTROL SLIP: IMPLEMENTATION ON DRIVE-TRAINS" INGENIEURS DE L'AUTOMOBILE, RAIP. BOULOGNE, FR, Nr. 649, 1. Juni 1989 (1989-06-01), Seiten 104-107, XP000068986 ISSN: 0020-1200

## Beschreibung

Die Erfindung betrifft eine Getriebevorrichtung gemäß der im Oberbegriff des Patentanspruches 1 näher definierten Art, ein Verfahren zum Steuern und Regeln einer Getriebevorrichtung mit den Merkmalen des Oberbegriffes des Patentanspruches 12 sowie einen Antriebsstrang eines Fahrzeugs gemäß der im Oberbegriff der Patentansprüche 16 oder 17 näher definierten Art.

Bei aus der Praxis bekannten Fahrzeugen sind zwischen einem Antriebsaggregat und einem Abtrieb Getriebevorrichtungen angeordnet, um verschiedene Betriebsbereiche, wie eine Vorwärtsfahrt, eine Rückwärtsfahrt sowie einen Schub-und Zugbetrieb, darstellen zu können. Dabei wird das Antriebsmoment der Antriebsmaschine bei frontgetriebenen Fahrzeugen auf die Vorderachse, bei heckgetriebenen Fahrzeugen auf die Hinterachse und bei allradgetriebenen Fahrzeugen mit verschiedenen und fest eingestellten Verteilungsgraden auf zwei oder auch mehrere angetriebene Fahrzeugachsen eines Allradfahrzeuges geführt.

Bei diesen Fahrzeugen ist zwischen der Antriebsmaschine und den antreibbaren Fahrzeugachsen ein Hauptgetriebe angeordnet, mittels welchem verschiedene Übersetzungen darstellbar sind. Dadurch wird der Art und Weise, wie eine als Verbrennungsmotor ausgeführte Antriebsmaschine sein Drehmoment bzw. seine Leistung über der Drehzahl entfaltet, Rechnung getragen. Derartige Hauptgetriebe sind als Schaltgetriebe, Stufenautomatgetriebe oder auch stufenlose Automatgetriebe ausgeführt.

Um das von dem Antriebsaggregat abgegebene Drehmoment auf mehrere antreibbare Fahrzeugachsen in Längsrichtung eines Fahrzeuges verteilen zu können, werden den vorbeschriebenen Hauptgetrieben im Leistungsfluss eines Antriebsstranges Getriebevorrichtungen bzw. Längsverteilergetriebe nachgeschaltet, die konstruktiv als separate Baueinheiten, in das Hauptgetriebe integriert oder als so genannte Hang-On-Lösungen an dem Hauptgetriebe ausgeführt sein können.

Darüber hinaus ist es auch vorgesehen, das einer antreibbaren Fahrzeugachse zugeführte Antriebsmoment zwischen den beiden Antriebsrädern dieser Fahrzeugachse zu verteilen, so dass Antriebsräder einer antreibbaren Fahrzeugachse mit unterschiedlichen Drehzahlen unabhängig voneinander entsprechend den verschiedenen Weglängen der linken bzw. rechten Fahrspur angetrieben werden können, wodurch das Antriebsmoment symmetrisch und somit giermomentenfrei auf beide Antriebsräder verteilbar ist.

Die in der Praxis herkömmlich verwendeten Bauarten von Differentialgetrieben sind sogenannte Kegelraddifferentiale, Stirnraddifferentiale in Planetenbauweise oder auch Schneckenraddifferentiale. Insbesondere Stirnraddifferentiale werden wegen der Möglichkeit zur unsymmetrischen Momentenverteilung meist als Längsdifferentiale eingesetzt. Kegelraddifferentiale stellen mittlerweile für den Querausgleich bei Fahrzeugen einen Standard dar und Schneckenraddifferentiale werden sowohl zur Längsverteilung als auch für eine Querverteilung eingesetzt.

Diesen beiden Vorteilen steht jedoch der Nachteil gegenüber, daß die auf die Fahrbahn übertragbaren Vortriebskräfte zweier Antriebsräder einer Fahrzeugachse bzw. zweier oder mehrerer Antriebsachsen aufgrund der Ausgleichstätigkeit eines Differentialgetriebes jeweils von dem geringeren bzw. geringsten übertragbaren Antriebsmoment der beiden Antriebsräder bzw. der Antriebsachsen abhängig ist. Das bedeutet, wenn ein beispielsweise auf Glatteis stehendes Antriebsrad durchdreht, wird dem anderen Antriebsrad kein höheres Moment als dem durchdrehenden Antriebsrad zugeführt, auch wenn es auf griffigem Untergrund steht. In einer solchen Fahrsituation kann das Fahrzeug aufgrund der Ausgleichstätigkeit eines Differentialgetriebes, welche eine Drehzahldifferenz zwischen zwei Abtriebswellen eines Differentialgetriebes ermöglicht, nachteilhafterweise nicht anfahren.

Deshalb ist in der Praxis dazu übergegangen worden, eine Ausgleichsbewegung eines Ausgleichsgetriebes bei Vorliegen kritischer Fahrzustände durch geeignete Maßnahmen zu behindern. Dies wird beispielsweise durch eine manuell oder automatisch mit mechanischen, magnetischen, pneumatischen oder hydraulischen Mitteln aktivierbare und an sich bekannte Differentialsperre realisiert, die durch ein Blockieren des Ausgleichsgetriebes jede Ausgleichsbewegung zu 100 % sperrt.

Die US 4471669 wird als nächst liegender Stand der Technik angesehen.

Die WO 02/09966 A1 offenbart ein Getriebe für ein vierrad-getriebenes Fahrzeug, bei dem eine Eingangswelle mit einem Planetenradsatz verbunden ist. Der Planetenradsatz ist hier als dreiwelliger Planetenradsatz ausgeführt, wobei ein Hohlrad mit der Eingangswelle, ein Sonnenrad mit einer ersten Abtriebswelle und der Planetenträger mit einem Planetengetriebesystem sowie mit einer weiteren Abtriebswelle des Getriebes wirkverbunden ist. Das Planetengetriebesystem weist drei Sonnenräder und drei jeweils mit einem Sonnenrad kämmende Planetenräder auf, die integral miteinander ausgeführt sind und einen gemeinsamen Planetenträger aufweisen. Der Planetenträger des Planetengetriebesystems und ein Sonnenrad des Planetengetriebesystems stehen jeweils mit einer Bremse in Wirkverbindung, wobei die Bremsen mit einer Kraftquelle in Verbindung stehen und die unabhängig voneinander betrieben und von einem elektronischen Steuergerät angesteuert werden. Mit dem elektronischen Steuergerät sind eine Vielzahl von Sensoren verbunden, deren Signale von dem elektronischen Steuergerät empfangen und in ein entsprechendes Steuersignal für die beiden Kupplungen umgewandelt werden. In Abhängigkeit der Ansteuerung der beiden Kupplungen wird die Ausgangsdrehzahl sowie das Drehmoment, welches auf die Vorderachse geführt wird, und die Abtriebsdrehzahl des Planetengetriebesystems sowie das Drehmoment, welches auf die Hinterachse geführt wird, eingestellt.

Diese aus dem Stand der Technik bekannten Allradverteilersystemen haben jedoch den Nachteil, dass eine variable Verteilung des Drehmomentes nur bedingt durchführbar ist und dass sie konstruktiv aufwändig gestaltet sind. Aufgrund der aufwändigen Ausführungen weisen die Allradverteilersysteme große äußere Abmessungen auf, was zu einem großen Bauraumbedarf führt. Darüber hinaus sind die bekannten Allradverteilersysteme nachteilhafterweise durch ein hohes Eigengewicht sowie hohe Herstellkosten gekennzeichnet.

Der vorliegenden Erfindung liegt daher die Aufgabe zugrunde, eine konstruktiv einfache sowie kostengünstig herstellbare Getriebevorrichtung für einen Antriebsstrang eines Fahrzeuges sowie ein Verfahren zum Steuern einer Getriebevorrichtung zur Verfügung zu stellen, mit welchen ein Verteilungsgrad eines Antriebsmomentes zwischen zwei Abtriebswellen bedarfsgerecht variierbar ist.

Erfindungsgemäß wird diese Aufgabe mit einer Getriebevorrichtung gemäß den Merkmalen des Patentanspruches 1, einem Verfahren zum Steuern und Regeln einer Getriebevorrichtung gemäß den Merkmalen des Patentanspruches 12 und einem Antriebsstrang mit den Merkmalen der Patentansprüche 16 und 17 gelöst.

Mit der erfindungsgemäßen Getriebevorrichtung zum Verteilen eines Antriebsmomentes auf wenigstens zwei Abtriebswellen mit mindestens zwei wenigstens dreiwelligen Planetensätzen, bei der jeweils eine erste Welle eines Planetensatzes mit einer Antriebswelle verbunden ist und jeweils eine zweite Welle eines Planetensatzes eine der Abtriebswellen darstellt, ist eine variable Verteilung eines Antriebsmomentes zwischen mehreren antreibbaren Fahrzeugachsen eines Fahrzeuges bzw. zwischen zwei Antriebsrädern einer antreibbaren Fahrzeugachse bedarfsgerecht und betriebszustandsabhängig durchführbar. Zudem weist die Getriebevorrichtung einen einfachen konstruktiven Aufbau auf und ist kostengünstig herstellbar.

Dies wird dadurch erreicht, dass jeweils eine dritte Welle der Planetensätze mit einer Bremse in Wirkverbindung steht, wobei ein Verteilungsgrad des Antriebsmomentes zwischen den beiden Abtriebswellen in Abhängigkeit der Übertragungsfähigkeiten der Bremse variierbar ist.

Mit dem erfindungsgemäßen Verfahren zum Steuern und Regeln der vorbeschriebenen erfindungsgemäßen Getriebevorrichtung werden Leistungsverluste im Vergleich zu aus der Praxis bekannten Allradsystemen, bei welchen ein Antriebsmoment zwischen mehreren antreibbaren Fahrzeugachsen bzw. zwischen zwei Antriebsrädern einer antreibbaren Fahrzeugachse über reibschlüssige Schaltelemente variabel verteilbar ist, reduziert. Dazu wird zur Verteilung eines Antriebsmomentes der Antriebsmaschine zwischen den beiden Abtriebswellen der Getriebevorrichtung, welche wahlweise mit jeweils einer antreibbaren Fahrzeugachse eines Kraftfahrzeugs oder mit jeweils einem Antriebsrad einer antreibbaren Fahrzeugachse verbindbar sind, die Übertragungsfähigkeiten der beiden Bremsen derart eingestellt, dass eine der Bremsen geschlossenen ist und die Übertragungsfähigkeit der anderen Bremse zwischen einem unteren Grenzwert und einem oberen Grenzwert, der einem geschlossenen Zustand der Bremse entspricht, variiert wird.

Mit dieser erfindungsgemäßen Vorgehensweise ist ein Antriebsmoment bzw. ein Drehmoment zwischen den beiden Abtriebswellen der erfindungsgemäßen Getriebevorrichtung stufenlos variabel verteilbar, wobei jeweils eine der beiden Bremsen in einem verlustfreien geschlossenen Zustand gehalten wird, während die andere Bremse zum Verteilen des Antriebsmomentes zwischen den beiden Abtriebswellen in geöffnetem Zustand, schlupfend oder in geschlossenem Zustand betrieben wird.

Bei dem erfindungsgemäßen Antriebsstrang eines Fahrzeugs gemäß den Merkmalen der Patentansprüche 16 und 17 besteht durch den Einsatz der erfindungsgemäßen Getriebevorrichtung in einem Längsantriebsstrang zwischen zwei antreibbaren Fahrzeugachsen und/oder in einem Querantriebsstrang einer antreibbaren Fahrzeugachse zur Verteilung eines Antriebsmomentes in Fahrzeuglängsrichtung und/oder in Fahrzeugquerrichtung die Möglichkeit, ein Antriebsmoment bedarfsgerecht und betriebszustandsbezogen zwischen mehreren antreibbaren Fahrzeugachsen und/oder zwischen zwei Antriebsrädern einer antreibbaren Fahrzeugachse verteilen zu können.

Weitere Vorteile und vorteilhafte Ausgestaltungen der Erfindung ergeben sich aus den Patentansprüchen und den unter Bezugnahme auf die Zeichnung prinzipmäßig beschriebenen Ausführungsbeispielen.
Es zeigt:
- Fig.1: ein nicht beansprüchte Grundschema einer Getriebevorrichtung;
- Fig.2: ein Räderschema einer als Achsdifferential ausgeführten nicht beansprüchte Getriebevorrichtung, wobei die Wirkverbindung zwischen den beiden Planetensätzen zwei Bremsen aufweist;
- Fig.3: ein Räderschema einer als Längsverteilerdifferential ausgeführten nicht beansprüchte Getriebevorrichtung, deren Wirkverbindung zwischen den beiden Planetensätzen zwei Bremsen aufweist;
- Fig.4: ein Räderschema einer Getriebevorrichtung gemäß Fig. 3, wobei die Wirkverbindung zusätzlich mit einem zuschaltbaren dritten Planetensatz ausgeführt ist;
- Fig.5: eine graphische Darstellung eines Zusammenhanges zwischen Übertragungsfähigkeiten der in Fig. 2 bis Fig. 4 dargestellten Bremsen und einem Verteilungsgrad eines Antriebsmomentes zwischen zwei Abtriebswellen;
- Fig.6: eine stark schematisierte Darstellung eines Antriebsstranges eines Allradfahrzeuges, bei dem zur Längsverteilung eines Antriebsmomentes zwischen zwei antreibbaren Fahrzeugachsen eine geregelte Kupplung und zur Querverteilung des einer antreibbaren Fahrzeugachse zugeführten Anteils des Antriebsmomentes eine Getriebevorrichtung vorgesehen ist;
- Fig.7: ein weiteres Ausführungsbeispiel eines Antriebsstranges, bei dem zur Querverteilung eine Getriebevorrichtung vorgesehen ist;
- Fig.8: ein drittes Ausführungsbeispiel eines Antriebsstranges, bei dem eine Getriebevorrichtung zur Längsverteilung und eine geregelte Differentialsperre zur Querverteilung eines Antriebsmomentes vorgesehen ist;
- Fig.9: ein viertes Ausführungsbeispiel eines Antriebsstranges, bei dem eine Längsverteilung eines Antriebsmomentes mit einer erfindungsgemäßen Getriebevorrichtung und eine Querverteilung eines Antriebsmoments mit einem offenen Differential durchgeführt wird; und
- Fig.10: ein fünftes Ausführungsbeispiel eines Antriebsstranges, bei dem sowohl die Längsverteilung als auch die Querverteilung eines Antriebsmoments mit einer Getriebevorrichtung durchgeführt wird.

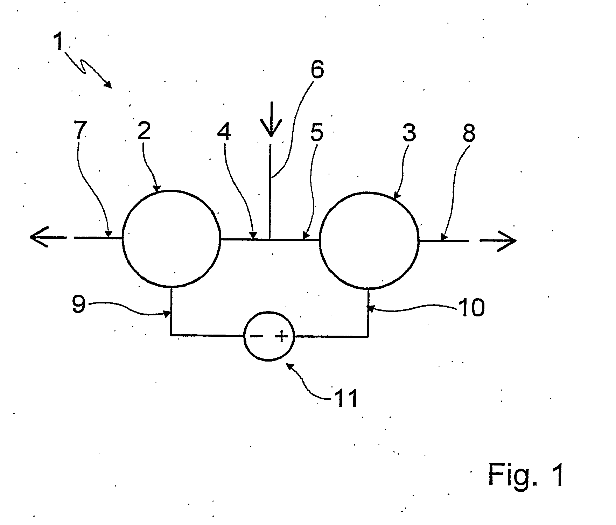

Bezug nehmend auf Fig. 1 ist ein Grundschema eines Getriebes bzw. einer Getriebevorrichtung 1 gezeigt, welches als Differentialgetriebe in einem Leistungspfad eines Antriebsstranges eines Fahrzeugs zwischen einem Hauptgetriebe und den antreibbaren Fahrzeugachsen zur Längsverteilung eines Antriebsmomentes einer Antriebsmaschine zwischen wenigstens zwei antreibbaren Fahrzeugachsen oder in einem Leistungspfad wenigstens einer der antreibbaren Fahrzeugachsen zur Querverteilung eines einer antreibbaren Fahrzeugachse zugeführten Teils eines Antriebsmomentes zwischen zwei Antriebsrädern dieser Fahrzeugachse einsetzbar ist.

Das Getriebe 1 ist mit einem ersten Planetensatz 2 und einem zweiten Planetensatz 3 ausgeführt, die in Abhängigkeit des jeweils vorliegenden Anwendungsfalles als Minus-, Plus-, Kegelrad- oder Stufenplanetensatz ausgebildet sein können. Jeweils eine erste Welle 4, 5 der beiden Planetensätze 2, 3 ist mit einer Antriebswelle 6, die eine Getriebeausgangswelle eines nicht näher dargestellten Hauptgetriebes des Antriebsstranges darstellt, verbunden. Jeweils eine zweite Welle 7 bzw. 8 der beiden Planetensätze 2, 3 stellen jeweils eine Abtriebswelle des Getriebes 1 dar, die entweder mit den antreibbaren Fahrzeugachsen oder den Antriebsrädern einer Fahrzeugachse in Wirkverbindung stehen. Eine dritte Welle 9 des ersten Planetensatzes 2 und eine dritte Welle 10 des zweiten Planetensatzes 3 sind über eine Wirkverbindung 11 miteinander verbunden.

Die Wirkverbindung 11 ist derart ausgeführt, dass ein betriebszustandsabhängiges Drehmoment der dritten Welle 9 des ersten Planetensatzes 2 oder der dritten Welle 10 des zweiten Planetensatzes 3 in Abhängigkeit eines Betriebszustandes der dritten Welle 10 des Planetensatzes 3 oder der dritten Welle 9 des ersten Planetensatzes 2 derart abstützbar ist, dass bei Auftreten eines Drehzahlunterschiedes zwischen den Abtriebswellen 6, 7 über die Wirkverbindung 11 ein den Drehzahlunterschied beeinflussendes Drehmoment an den Planetensätzen 2 und 3 bzw. den dritten Wellen 9 und 10 der beiden Planetensätze 2 und 3 anliegt.

Die Wirkverbindung kann dabei in der nachfolgend näher beschriebenen Art und Weise alternativ oder in Kombination mit einer Drehzahlinvertierung zwischen den beiden miteinander wirkverbundenen Wellen 9 und 10, einer stufenlosen Übersetzungseinrichtung, mit einer Momentenquelle zur Erhöhung oder Verkleinerung eines Momentes an wenigstens einer der beiden miteinander wirkverbundenen Wellen 9 und 10 und/oder einem dritten Planetensatz ausgeführt sein.

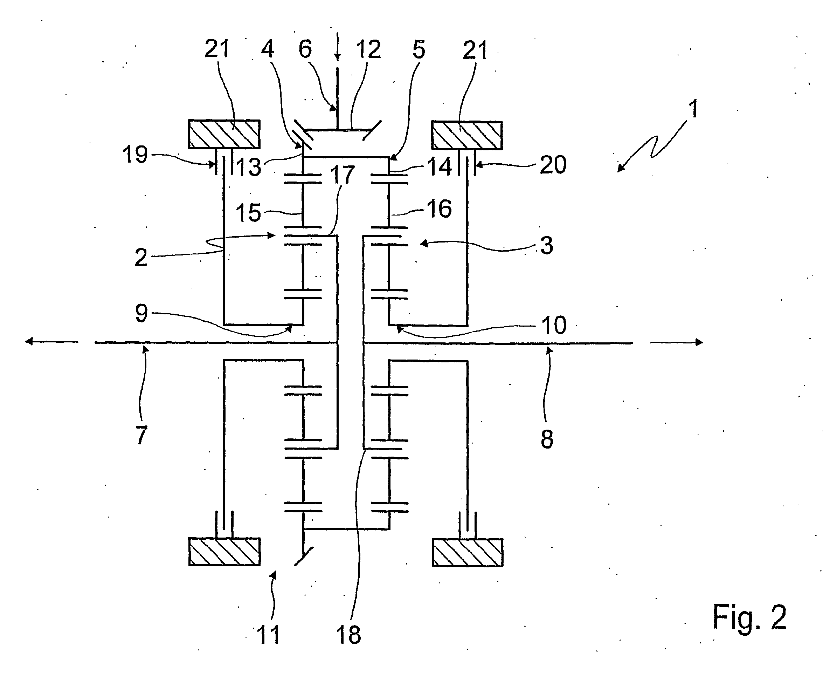

Fig. 2 zeigt ein Räderschema eines ersten Ausführungsbeispiels des in Fig. 1 als Grundschema dargestellten Getriebes 1. Ein Antriebsmoment der Antriebswelle 6 wird über ein erstes Kegelrad 12 auf zwei hintereinander verbundene Hohlräder 13, 14 der beiden Planetensätze 2 und 3 geführt, die die beiden in Fig. 1 lediglich schematisiert dargestellten ersten Wellen 4 und 5 der beiden Planetensätze 2 und 3 darstellen. Von dort aus wird das Antriebsmoment der Antriebswelle 6 auf mit den beiden Hohlrädern 13 und 14 in Eingriff stehende Planetenräder 15 und 16 geführt, die jeweils auf einem Steg 17 bzw. 18 drehbar gelagert sind und die beiden Stege 17 und 18 aufgrund ihrer Abrollbewegung in den Hohlrädern 13 und 14 antreiben. Die beiden Stege 17 und 18 der Planetensätze 2 und 3 sind wiederum mit den beiden Abtriebswellen 7 und 8 verbunden, so dass das über das erste Kegelrad 12, die beiden Hohlräder 13 und 14, die Planetenräder 15 und 16 sowie die Stege 17 und 18 geführte Antriebsmoment auf die beiden Abtriebswellen 7 und 8 gelangt.

Zusätzlich kämmen die Planetenräder 15 und 16 der Planetensätze 2 und 3 jeweils mit den Sonnenrädern bzw. den dritten Wellen 9 und 10 der Planetensätze 2 und 3, die jeweils mit einer Bremse 19 und 20 in Wirkverbindung stehen, über welche bei entsprechend eingestellter Übertragungsfähigkeit jeweils ein Drehmoment in einem Gehäuse 21 der Getriebevorrichtung 1 abstützbar ist.

Das bedeutet, dass die in Fig. 1 dargestellte Wirkverbindung 11 bei dem in Fig. 2 dargestellten Ausführungsbeispiel der Getriebevorrichtung 1 über die beiden Bremsen 19 und 20 sowie das Getriebegehäuse 21 ausgeführt ist, wobei die beiden Bremsen 19 und 20 über ein separates Steuergerät oder über die Getriebesteuereinrichtung der Getriebevorrichtung 1 angesteuert werden können.

Die beiden Bremsen 19 und 20 stellen vorliegend jeweils eine Einrichtung zum Aufbringen eines Momentes bzw. eine Momentenquelle zur Erhöhung oder Verkleinerung eines Momentes an wenigstens einer der beiden miteinander wirkverbundenen Wellen 9 und 10 dar, wobei in Abhängigkeit des jeweils auf die Wirkverbindung 11 bremsenseitig aufgebrachten Momentes das über die Antriebswelle 6 in die Getriebevorrichtung 1 eingeleitete Antriebsmoment zwischen den beiden Abtriebswellen 7 und 8 variabel aufgeteilt wird.

Die Ausgestaltung der Wirkverbindung 11 mit den beiden Bremsen 19 und 20 als Momentenquelle bietet die Möglichkeit, betriebszustandsabhängig jeweils ein derartiges Bremsmoment auf die beiden miteinander wirkverbundenen Sonnenräder 9 und 10 der beiden Planetensätze 2 und 3 aufzubringen, dass beispielsweise bei einer Drehzahldifferenz zwischen den beiden Abtriebswellen 7 und 8 eine Ausgleichstätigkeit des Getriebes 1 zwischen den beiden Abtriebswellen 7 und 8 reduziert wird. D. h., dass über die beiden Bremsen 19 und 20 eine gezielte Momentenverkleinerung an den beiden miteinander wirkverbundenen Sonnenrädern bzw. dritten Wellen 9 und 10 der beiden Planetensätze 2 und 3 durchführbar ist, um beispielsweise einem Übersteuern oder einem Untersteuern während einer Kurvenfahrt durch Reduzierung der Drehzahldifferenz zwischen den Antriebsrädern einer Antriebsachse effektiv und auf einfache Art und Weise entgegenzuwirken.

Des weiteren besteht die Möglichkeit, eine Seitenwindempfindlichkeit eines Fahrzeuges durch ein gezieltes Einstellen einer Differenzgeschwindigkeit zwischen den beiden Abtriebswellen und somit zwischen zwei Antriebsrädern einer Fahrzeugachse zu verbessern.

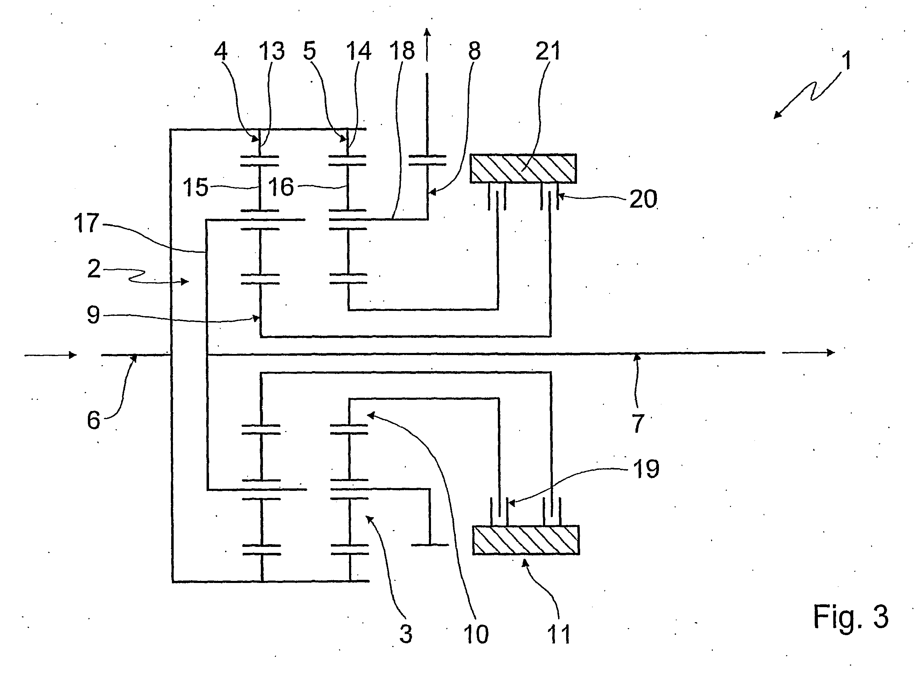

In Fig. 3 ist ein Ausführungsbeispiel eines Räderschemas des Getriebes 1 gezeigt. Das in Fig. 3 dargestellte Räderschema des Getriebes 1 stellt ein Längsverteilerdifferential dar, bei dem die Wirkverbindung 11 zwischen der dritten Welle 9 des ersten Planetensatzes 2 und der dritten Welle 10 des zweiten Planetensatzes 3 wiederum über die beiden gehäuseseitig abstützbaren Bremsen 19 und 20 ausgeführt ist.

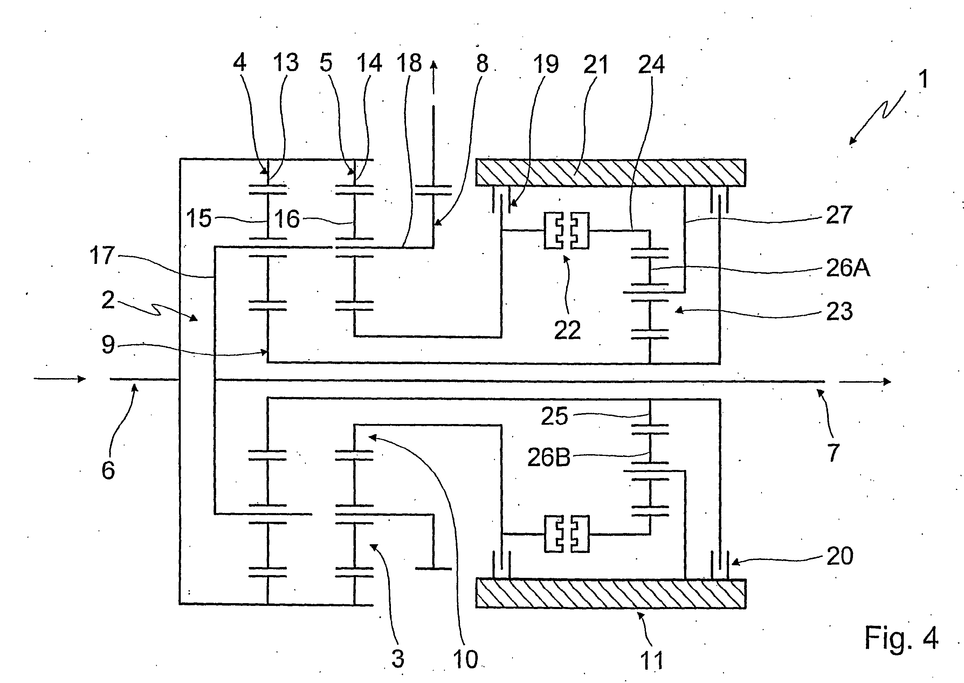

Bezug nehmend auf Fig. 4 ist ein Räderschema einer Ausführungsform der erfindungsgemäßen Getriebevorrichtung 1 dargestellt, bei der die Wirkverbindung 11 aus zwei zueinander parallelen Leistungspfaden besteht. Dabei ist ein erster Leistungspfad mit dem vorliegend über eine Klauenkupplung 22 in den Kraftfluss des Getriebes 1 zuschaltbaren dritten Planetensatz 23 ausgebildet. Der zweite Leistungspfad besteht aus den beiden Bremsen 19, 20, die jeweils mit dem Sonnenrad 9 des ersten Planetensatzes 2 bzw. dem Sonnenrad 10 des zweiten Planetensatzes 3 verbunden sind und die beiden Sonnenräder 9 und 10 der Planetensätze 2 und 3 in geschlossenem Zustand getriebegehäuseseitig festlegen, und dem Getriebegehäuse 21. Sind die beiden Bremsen 19 und 20 gleichzeitig geschlossen, ist eine Ausgleichsbetätigung des Getriebes 1 vollständig aufgehoben und die beiden Abtriebswellen 7 und 8 werden mit gleicher Drehzahl betrieben.

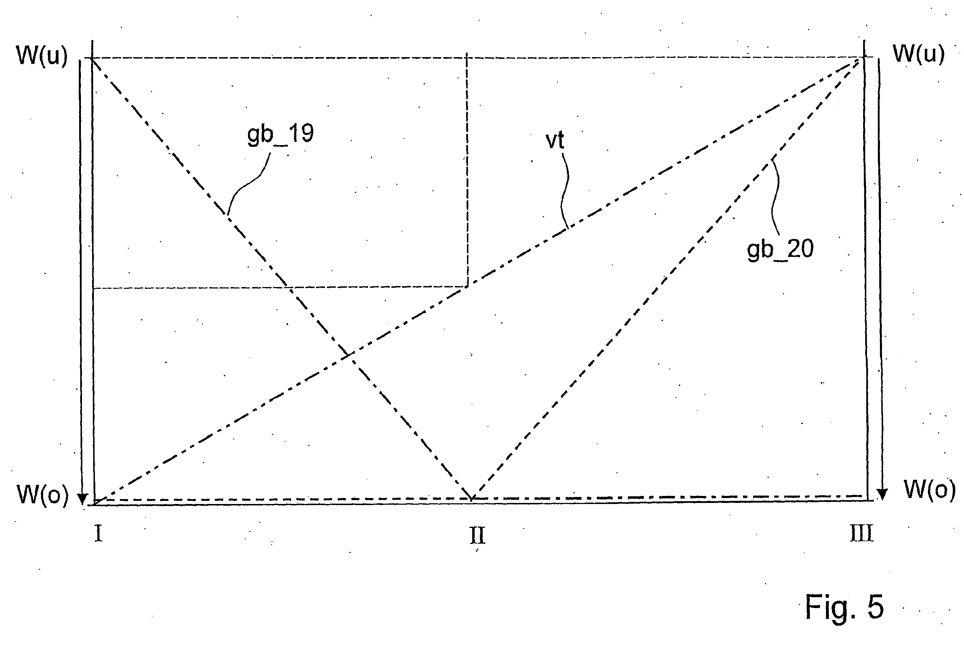

In geöffnetem Zustand der Klauenkupplung 22 ist durch die anhand von Fig. 5 nachbeschriebene Ansteuerung der beiden Bremsen 19 und 20 ein Verteilungsgrad des Antriebsmomentes zwischen den beiden Abtriebswellen 7 und 8 zwischen 0 und 100 % variierbar, wobei zur Reduzierung von Verlustleistungen vorzugsweise jeweils eine der Bremsen 19 bzw. 20 in geschlossenem Zustand und die jeweils andere Bremse 20 bzw. 19 zwischen einem vollständig geöffneten Zustand bis hin zu einem vollständig geschlossenen Zustand betrieben wird.

Die dritte Welle bzw. das Sonnenrad 10 des zweiten Planetensatzes 3 ist mit einem Hohlrad 24 des dritten Planetensatzes 23 verbunden und die dritte Welle bzw. das Sonnenrad 9 des ersten Planetensatzes 2 ist mit einer dritten Welle bzw. einem Sonnenrad 25 des dritten Planetensatzes 23 gekoppelt. Zwischen dem Hohlrad bzw. der ersten Welle 24 des dritten Planetensatzes 23 und dem Sonnenrad 25 des dritten Planetensatzes 23 wälzen sich mehreren Planetenräder ab, wobei in Fig. 4 zwei Planetenräder 26A und 26B dargestellt sind, die drehbar auf einem gehäusefest angeordneten Planetenträger bzw. einer zweiten Welle 27 des dritten Planetensatzes 23 gelagert sind.

In geöffnetem Zustand der Bremsen 19 und 20 und gleichzeitig geschlossener Klauenkupplung 22 wird das über die Antriebswelle 6 in die Getriebevorrichtung 1 eingeleitete Antriebsmoment in Abhängigkeit einer Grundverteilung des Getriebes 1 auf die beiden Abtriebswellen 7 und 8 verteilt, wobei der Grundverteilungsgrad durch das Verhältnis der Zähneanzahl des Hohlrades 24 zu der Zähneanzahl des Sonnenrades 25 des dritten Planetensatzes 23 bestimmt wird. Dieser Grundverteilungsgrad ist in Abhängigkeit von einem über die Bremse 19 oder die Bremse 20 bremsensseitig aufgebrachten Bremsmoment multipliziert mit einem Faktor eines Verhältnisses aus der Zähnezahl des Hohlrades 4 des ersten Planetensatzes 2 bzw. des Hohlrades 5 des zweiten Planetensatzes 3 zu der Zähnezahl des Sonnenrades 9 des ersten Planetensatzes bzw. des Sonnenrades 10 des zweiten Planetensatzes in Richtung eines oberen oder eines unteren Grenzwertes des Verteilungsgrades stufenlos variabel veränderbar.

Fig. 5 zeigt drei stark schematisierte Verläufe, wovon ein erster Verlauf gb_19 einen Verlauf einer Übertragungsfähigkeit der ersten Bremse 19 zwischen einem unteren Grenzwert W(u) und einem oberen Grenzwert W(o) darstellt. Ein weiterer Verlauf gb_20 stellt den Verlauf der Übertragungsfähigkeit der zweiten Bremse 20 dar, der mit dem Verlauf gb_19 der ersten Kupplung 19 korrespondiert. Ein dritter Verlauf vt stellt den Verlauf eines Verteilungsgrades des Antriebsmomentes zwischen den beiden Abtriebswellen 7 und 8 in Abhängigkeit der Verläufe gb_19 und gb_20 der Übertragungsfähigkeiten der Bremsen 19 und 20 graphisch dar.

In einem Punkt I, in welchem die Übertragungsfähigkeit der ersten Bremse 19 dem unteren Grenzwert W(u) entspricht, wird über die erste Bremse im Wesentlichen kein Drehmoment im Gehäuse 21 des Getriebes 1 abgestützt. Gleichzeitig ist die Übertragungsfähigkeit der zweiten Bremse 20 auf den oberen Grenzwert W(o) eingestellt, bei dem die zweite Bremse 20 geschlossen ist. In diesem Betriebszustand der beiden Bremsen 19 und 20 wird das gesamte Antriebsmoment einer Antriebsmaschine bzw. das Getriebeausgangsmoment eines Hauptgetriebes auf die mit dem ersten Planetensatz 2 verbundene Abtriebswelle 7 geführt.

Im Bereich zwischen dem Punkt I und einem zweiten Punkt II des Diagramms gemäß Fig. 5 wird die Übertragungsfähigkeit der zweiten Bremse 20 derart gesteuert und geregelt eingestellt, dass die zweite Bremse 20 geschlossen ist. Gleichzeitig wird die Übertragungsfähigkeit der ersten Bremse 19 von ihrem unteren Grenzwert W(u), bei dem sie kein Drehmoment im Gehäuse 21 des Getriebes 1 abstützt, in Richtung des oberen Grenzwertes W(o) der Übertragungsfähigkeit verändert, bei welchem die erste Bremse 19 ebenfalls geschlossen ist. Das bedeutet, dass die Übertragungsfähigkeit der ersten Kupplung 19 im Bereich zwischen dem Punkt I und dem Punkt II stetig angehoben wird. Dies hat zur Folge, dass sich der Verteilungsgrad des Antriebsmomentes zwischen den beiden Abtriebswellen 7 und 8 ändert, da mit steigender Übertragungsfähigkeit der ersten Bremse 19 ein zunehmender Teil des Antriebsmomentes auf die mit dem zweiten Planetensatzes 3 verbundene Abtriebswelle 8 geführt wird.

Bei Vorliegen des Betriebszustandes des Getriebes 1, der dem Punkt II des Diagramms gemäß Fig. 5 entspricht und bei dem beide Bremsen 19 und 20 geschlossen sind, liegt ein definierter Verteilungsgrad des Antriebsmomentes zwischen den beiden Abtriebswellen 7 und 8 vor.

In einem Bereich zwischen dem zweiten Punkt II und einem dritten Punkt III des Diagramms gemäß Fig. 5 wird die Übertragungsfähigkeit der ersten Bremse 19 derart geregelt und gesteuert eingestellt, dass die erste Bremse 19 geschlossen ist. Gleichzeitig wird die Übertragungsfähigkeit der zweiten Bremse 20 ausgehend von dem oberen Grenzwert W(o) der Übertragungsfähigkeit, bei welchem die zweite Bremse 20 geschlossen ist, stetig in Richtung des unteren Grenzwertes W(u) der Übertragungsfähigkeit reduziert, bei dem die zweite Bremse 20 im Wesentlichen kein Drehmoment im Gehäuse 21 des Getriebes 1 abstützt.

Wie Fig. 5 zu entnehmen ist, steigt der Verlauf vt des Verteilungsgrades des Antriebsmomentes zwischen den beiden Abtriebswellen 7 und 8 mit zunehmender Reduzierung der Übertragungsfähigkeit der zweiten Bremse 41 bis hin zu seinem maximalen Wert im Punkt III an, bei dem das Antriebsmoment vollständig auf die mit dem zweiten Planetensatz verbundene Abtriebswelle 8 übertragen wird.

Mittels der beiden steuer- und regelbaren Bremsen 19 und 20 besteht die Möglichkeit, das Antriebsmoment bedarfsgerecht, stufenlos und wirkungsgradoptimiert zwischen den beiden Abtriebswellen 7 und 8 zu verteilen. Eine Verbesserung des Wirkungsgrades wird durch die vorbeschriebene Vorgehensweise bei der Steuerung und Regelung der beiden Bremsen erreicht, da stets eine der beiden Bremsen 19 bzw. 20 in geschlossenem Zustand und schlupffrei betrieben wird, während die andere Bremse 20 bzw. 19 mit einer mit der betriebssituationsabhängigen Antriebsleistungsverteilung im Antriebsstrang korrespondierenden Differenzdrehzahl betrieben wird. Mittels dieser Betriebsstrategie lassen sich die Reibungsverluste mit allen Vorteilen eines über ein reibschlüssiges Schaltelement gesteuerten Allradantriebes minimieren.

Zusätzlich besteht die Möglichkeit, die Klauenkupplung 22 über die beiden Bremsen 19, 20 zu synchronisieren und den dritten Planetensatz 23 in den Kraftfluss des Getriebes 1 zuzuschalten, so dass ein bevorzugter Grundverteilungsgrad des Antriebsmomentes zwischen den beiden Abtriebswellen 7 und 8 vorliegt, der bis auf die in den Verzahnungen des dritten Planetensatzes 24 auftretenden Reibungsverluste mit geringen Verlusten zur Verfügung steht.

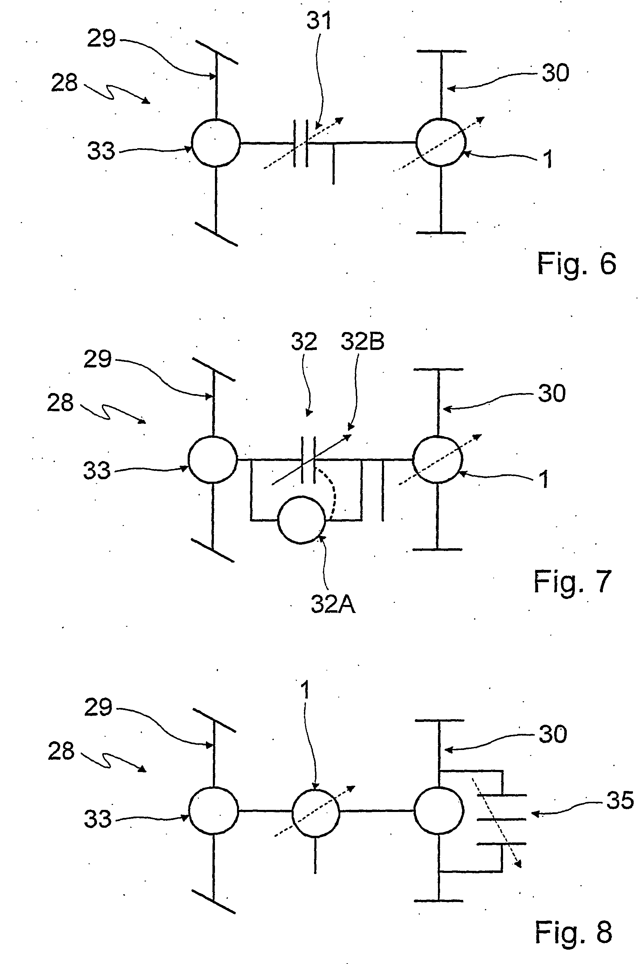

In Fig. 6 bis Fig. 10 sind mehrere Ausführungsvarianten eines Antriebsstranges 28 eines Kraftfahrzeuges stark schematisiert dargestellt, wobei zur Längsverteilung bzw. zur Querverteilung des Antriebsmomentes im Antriebsstrang 28 eine der vorbeschriebenen Ausführungsformen der Getriebevorrichtung 1 mit verschiedenen weiteren, lediglich piktogrammartig dargestellten Einrichtungen zum Verteilen eines Antriebsmomentes in Fahrzeuglängsrichtung zwischen zwei antreibbaren Fahrzeugachsen bzw. in Fahrzeugquerrichtung zwischen zwei Antriebsrädern einer Fahrzeugachse kombiniert sind. Mit Hilfe der Einrichtung zum Verteilen eines Antriebsmomentes im Antriebsstrang soll insbesondere in kritischen Fahrsituationen eine geeignete Verteilung des Antriebsmomentes ermöglicht werden, um an den antreibbaren Fahrzeugachsen bzw. an den Antriebsrädern eines Fahrzeugs einen Vortrieb aufrecht zu erhalten bzw. gegebenenfalls fahrstabilisierend eingreifen zu können.

Die in Fig. 6 bis Fig. 10 dargestellten Antriebsstränge 42 zeigen jeweils zwei antreibbare Fahrzeugachsen 29, 30, wobei die Fahrzeugachse 29 vorliegend eine Vorderachse und die Fahrzeugachse 30 eine Hinterachse eines Fahrzeugs darstellt.

Bezug nehmend auf Fig. 6 ist im Antriebsstrang 28 zur Längsverteilung eines Antriebsmomentes zwischen den beiden Fahrzeugachsen 29 und 30 eine stufenlos regelbare Kupplung 31, zur Querverteilung an der Vorderachse 29 ein an sich bekanntes offenes Differential 32 und zur Querverteilung an der Hinterachse 30 ein erfindungsgemäß ausgeführtes Getriebe 1 bzw. ein Überlagerungsgetriebe angeordnet.

Der Antriebsstrang 28 gemäß Fig. 7 unterscheidet sich von dem Ausführungsbeispiel des Antriebsstranges 28 gemäß Fig. 6 darin, dass zur Längsverteilung eines Antriebsmomentes zwischen der Vorderachse 29 und der Hinterachse 30 eine Einrichtung 32 angeordnet ist, die bei Vorliegen einer Differenzdrehzahl zwischen der Vorderachse 29 und der Hinterachse 30 über ein Pumpensystem 32A einen hydraulischen Druck aufbaut, mit dem miteinander in Reibeingriff bringbare Reibelemente einer Lamellenkupplung 32B derart beaufschlagbar sind, dass auf die beiden Fahrzeugachsen 29 und 30 jeweils ein die Differenzdrehzahl reduzierendes Drehmoment aufbringbar ist, wobei der Druckaufbau bei Drehzahlgleichheit nahezu Null ist.

Bei dem in Fig. 8 dargestellten Antriebsstrang 28 wird die Längsverteilung des Antriebsmomentes zwischen der Vorderachse 29 und der Hinterachse 30 mit einem ausgeführten Getriebe 1 und die Querverteilung des der Vorderachse 29 zugeführten Anteils des Antriebsmomentes über ein offenes Differential 33 durchgeführt. Die Querverteilung des der Hinterachse 30 zugeführten Anteils des Antriebsmomentes wird über eine an sich bekannte geregelte Differentialsperre 35 vorgenommen.

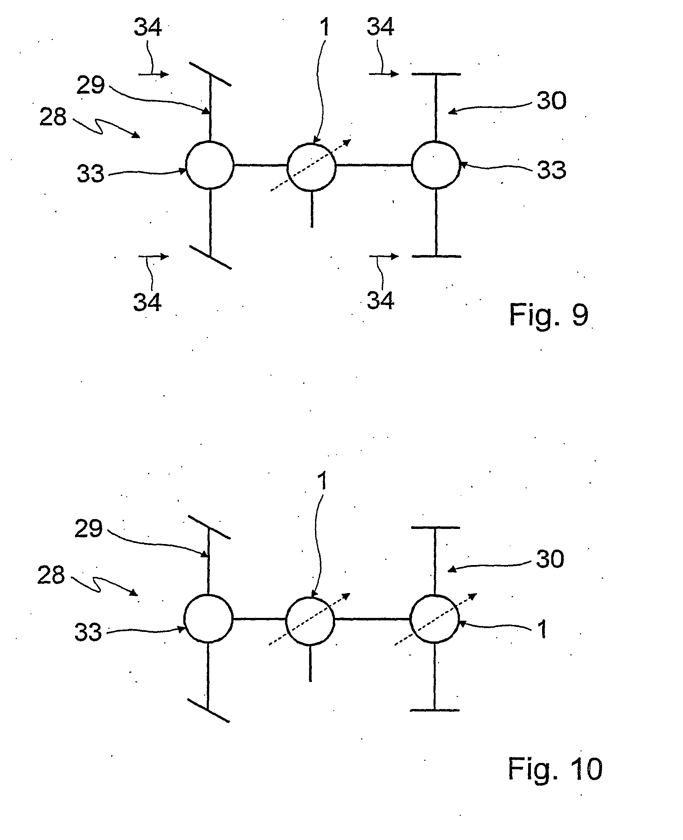

Bezug nehmend auf Fig. 9 ist ein Antriebsstrang 28 gezeigt, bei dem zur Fahrstabilisierung bzw. zur freien Momentenverteilung zwischen der Vorderachse und der Hinterachse im Längsantriebsstrang ein ausgeführtes Überlagerungsgetriebe 1 integriert ist, das mit einem an den einzelnen Rädern durchführbaren Bremseingriff kombiniert ist, wobei der Bremseingriff in Fig. 9 symbolisch durch die mit dem Bezugszeichen 34 näher gekennzeichneten Pfeile graphisch dargestellt ist. Zur Querverteilung sind in den Leistungssträngen der Fahrzeugachsen 29 und 30 jeweils offene Differentiale vorgesehen.

Bei dem in Fig. 10 dargestellten Antriebsstrang 28 ist sowohl im Längsantriebsstrang als auch im Leistungsstrang der Hinterachse 30 ein ausgeführtes Überlagerungsgetriebe angeordnet, womit vorteilhafterweise die Möglichkeit besteht, einen Verteilungsgrad des Antriebsmomentes zwischen den beiden Fahrzeugachsen 29 und 30 bedarfsgerecht und betriebszustandsbezogen stufenlos zu verändern sowie den der Hinterachse 30 zugeführten Anteil des Antriebsmomentes bedarfsgerecht und betriebszustandsabhängig zwischen den beiden Antriebsrädern der Hinterachse 30 zu verteilen. Die Querverteilung des der Vorderachse 29 zugeführten Anteils des Antriebsmomentes erfolgt über ein offenes Differential.

Selbstverständlich liegt es im Ermessen des Fachmannes, den Antriebsstrang eines Fahrzeuges im Längsantriebsstrang sowie in den Leistungssträngen in Fahrzeugquerrichtung der beiden Fahrzeugachsen mit einer erfindungsgemäß ausgeführten Getriebevorrichtung auszubilden. Dann besteht vorteilhafterweise die Möglichkeit, das Antriebsmoment zwischen allen Antriebsrädern des Antriebsstranges der jeweilig vorliegenden Fahrsituation angepasst zu verschieben.

### Bezugszeichen

- 1: Getriebevorrichtung, Getriebe
- 2: erster Planetensatz
- 3: zweiter Planetensatz
- 4: erste Welle des ersten Planetensatzes, Hohlrad
- 5: erste Welle des zweiten Planetensatzes, Hohlrad
- 6: Antriebswelle
- 7: zweite Welle des ersten Planetensatzes, Abtriebswelle
- 8: zweite Welle des zweiten Planetensatzes, Abtriebswelle
- 9: dritte Welle des ersten Planetensatzes
- 10: dritte Welle des zweiten Planetensatzes
- 11: Wirkverbindung
- 12: Kegelrad
- 13: Hohlrad des ersten Planetensatzes
- 14: Hohlrad des zweiten Planetensatzes
- 15: Planetenräder des ersten Planetensatzes
- 16: Planetenräder des zweiten Planetensatzes
- 17: Steg des ersten Planetensatzes
- 18: Steg des zweiten Planetensatzes
- 19: erste Bremse
- 20: zweite Bremse
- 21: Getriebegehäuse
- 22: Klauenkupplung
- 23: dritter Planetensatz
- 24: Hohlrad des dritten Planetensatzes
- 25: Sonnenrad des dritten Planetensatzes
- 26A, B: Planetenräder des dritten Planetensatzes
- 27: Planetenträger des dritten Planetensatzes
- 28: Antriebsstrang
- 29: Fahrzeugachse, Vorderachse
- 30: Fahrzeugachse, Hinterachse
- 31: geregelte Kupplung
- 32: Einrichtung
- 32A: Pumpensystem
- 32B: Lamellenkupplung
- 33: offenes Differential
- 34: Pfeil
- 35: geregelte Differentialsperre
- vt: Verteilungsrad des Antriebsmomentes zwischen den Abtriebswellen
- gb_19: Verlauf der Übertragungsfähigkeit der ersten Bremse
- gb_41: Verlauf der Übertragungsfähigkeit der zweiten Bremse
- W(u): unterer Grenzwert der Übertragungsfähigkeit der Bremsen
- W(o): oberer Grenzwert der Übertragungsfähigkeit der Bremsen

## Patentansprüche

1. Getriebevorrichtung (1) zum Verteilen eines Antriebsmomentes auf wenigstens zwei Abtriebswellen (7, 8) mit mindestens zwei wenigstens dreiwelligen Planetensätzen (2, 3), wobei jeweils eine erste Welle (4 bzw. 5) eines Planetensatzes (2 bzw. 3) mit einer Antriebswelle (6) verbunden ist und jeweils eine zweite Welle eines Planetensatzes (2 oder 3) eine der Abtriebswellen (7 oder 8) darstellt und jeweils eine dritte Welle (9, 10) der Planetensätze (2, 3) derart mit einer Bremse (19, 20) in Wirkverbindung steht, dass ein Verteilungsgrad des Antriebsmomentes zwischen den beiden Abtriebswellen (7, 8) in Abhängigkeit der Übertragungsfähigkeiten der Bremsen (19, 20) variiert, **dadurch gekennzeichnet, dass** zwischen den beiden dritten Wellen (9, 10) der ersten und zweiten Planetensätze (2, 3) eine zuschaltbare Wirkverbindung (11) vorgesehen ist, die mit einem dritten Planetensatz (23) ausgeführt ist.

2. Getriebevorrichtung nach Anspruch 1, **dadurch gekennzeichnet, dass** die erste Welle (4) des ersten Planetensatzes (2) und die erste Welle (5) des zweiten Planetensatzes (3) als Hohlrad ausgeführt sind.

3. Getriebevorrichtung nach Anspruch 1 oder 2, **dadurch gekennzeichnet, dass** die zweite Welle (7) des ersten Planetensatzes (2) und die zweite Welle (8) des zweiten Planetensatzes (3) als Planetenträger ausgeführt sind.

4. Getriebevorrichtung nach einem der Ansprüche 1 bis 3, **dadurch gekennzeichnet, dass** die dritte Welle (9) des ersten Planetensatzes (2) und die dritte Welle (10) des zweiten Planetensatzes (3) als Sonnenrad ausgeführt sind.

5. Getriebevorrichtung nach einem der Ansprüche 1 bis 4, **dadurch gekennzeichnet, dass** die dritte Welle (9) des ersten Planetensatzes (2) mit einer ersten Welle (24) des dritten Planetensatzes (23) verbindbar ist.

6. Getriebevorrichtung nach einem der Ansprüche 1 bis 5, **dadurch gekennzeichnet, dass** die dritte Welle (10) des zweiten Planetensatzes (3) mit einer dritten Welle (25) des dritten Planetensatzes (23) verbindbar ist.

7. Getriebevorrichtung nach einem der Ansprüche 1 bis 6, **dadurch gekennzeichnet, dass** die Wirkverbindung (11) zwischen der dritten Welle (9) des ersten Planetensatzes (2) und der dritten Welle (10) des zweiten Planetensatzes (3) über eine zwischen der dritten Welle (9) des ersten Planetensatzes (2) und der ersten Welle (24) des dritten Planetensatzes (23) oder der dritten Welle (10) des zweiten Planetensatzes (3) und der dritten Welle (25) des dritten Planetensatzes (23) angeordnete Kupplung (22) zuschaltbar ist.

8. Getriebevorrichtung nach einem der Ansprüche 1 bis 7, **dadurch gekennzeichnet, dass** eine zweite Welle (27) des dritten Planetenradsatzes (23) gehäusefest ausgeführt ist.

9. Getriebevorrichtung nach einem der Ansprüche 1 bis 8, **dadurch gekennzeichnet, dass** die erste Welle (24) des dritten Planetensatzes (23) als Hohlrad ausgeführt ist.

10. Getriebevorrichtung nach einem der Ansprüche 1 bis 9, **dadurch gekennzeichnet, dass** die zweite Welle (27) des dritten Planetensatzes (23) als Planetenträger ausgeführt ist.

11. Getriebevorrichtung nach einem der Ansprüche 1 bis 10, **dadurch gekennzeichnet, dass** die dritte Welle (25) des dritten Planetensatzes (23) als Sonnenrad ausgeführt ist.

12. Verfahren zum Steuern und Regeln einer Getriebevorrichtung (1) gemäß einem der vorstehend genannten Ansprüche, wobei zur Verteilung eines Antriebsmomentes einer Antriebsquelle zwischen den beiden Abtriebswellen (7, 8) der Getriebevorrichtung (1) die Übertragungsfähigkeiten der beiden Bremsen (19, 20) eingestellt werden **dadurch gekennzeichnet, dass** die Einstellung der Bremsen derart erfolgt, dass eine Bremse (19 bzw. 20) geschlossen ist und die Übertragungsfähigkeit der anderen Bremse (20 bzw. 19) zwischen einem unteren Grenzwert (W(u)) und einem oberen Grenzwert (W(o)), der vorzugsweise einem geschlossenen Zustand der Bremsen (k_VA, k_HA) entspricht, variiert wird.

13. Verfahren nach Anspruch 12, **dadurch gekennzeichnet, dass** bei Vorliegen des unteren Grenzwerts (W(u)) der Übertragungsfähigkeit der Bremsen (19, 20) im Wesentlichen kein Drehmoment von den Bremsen (19, 20) abgestützt wird und in geschlossenem Zustand der Bremsen (19, 20) ein an einer Bremse (19 oder 20) anliegendes Drehmoment vollständig abgestützt wird.

14. Verfahren nach Anspruch 12 oder 13, **dadurch gekennzeichnet, dass** bei Vorliegen einer Übertragungsfähigkeit einer Bremse (19 oder 20), die dem unteren Grenzwert (W(u)) entspricht, auf die Abtriebswelle (7 oder 8) eines Planetensatzes (2 oder 3 ), welche dieser Bremse (19 oder 20) zugeordnet ist, im Wesentlichen kein Antriebsmoment geführt wird, und dass das an der Getriebevorrichtung (1) anliegende Antriebsmoment der Antriebsquelle im Wesentlichen vollständig auf die der gleichzeitig geschlossenen Bremse (20 oder 19) zugeordneten Abtriebswelle (8 oder 7) des anderen Planetensatzes (3 oder 2) geführt wird.

15. Verfahren nach einem der Ansprüche 12 bis 14, **dadurch gekennzeichnet, dass** ein Verteilungsgrad des Antriebsmomentes zwischen den beiden Abtriebswellen (7, 8) in Abhängigkeit der Übertragungsfähigkeit der Bremse (19 oder 20) variiert, deren Übertragungsfähigkeit verändert wird.

16. Antriebsstrang (28) eines Fahrzeugs mit wenigstens zwei antreibbaren Fahrzeugachsen (29, 30) und wenigstens einer Getriebevorrichtung (1) gemäß einem der vorstehend genannten Ansprüche 1 bis 11, wobei die Getriebevorrichtung (1) in einem Leistungspfad zwischen einer Antriebsquelle und den Fahrzeugachsen (29, 30) zum bedarfsgerechten und betriebszustandabhängigen Verteilen des Antriebsmomentes der Antriebsquelle zwischen den Fahrzeugachsen (29, 30) angeordnet ist, **dadurch gekennzeichnet, dass** die Getriebevorrichtung (1) drei Planetensätze (2, 3, 23) aufweist.

17. Antriebsstrang (28) eines Fahrzeugs mit wenigstens zwei antreibbaren Fahrzeugachsen (29, 30) und wenigstens einer Getriebevorrichtung (1) gemäß einem der vorstehend genannten Ansprüche 1 bis 11, wobei die Getriebevorrichtung (1) in einem Leistungspfad einer Fahrzeugachse (29 oder 30) zum bedarfsgerechten und betriebszustandabhängigen Verteilen des der Fahrzeugachse (29 oder 30) zugeführten Anteils des Antriebsmomentes in Fahrzeugquerrichtung zwischen zwei Antriebsrädern der Fahrzeugachse(29 oder 30) angeordnet ist, **dadurch gekennzeichnet, dass** die Getriebevorrichtung (1) drei Planetensätze (2, 3, 23) aufweist.

18. Antriebsstrang nach Anspruch 16, **dadurch gekennzeichnet, dass** der Leistungspfad zwischen der Antriebsquelle und den Fahrzeugachsen (29, 30) zum bedarfsgerechten und betriebszustandabhängigen Verteilen des Antriebsmomentes der Antriebsquelle zwischen den Fahrzeugachsen (29, 30) mit einer regelbaren Kupplung (22) ausgeführt ist.

19. Antriebsstrang nach Anspruch 16, **dadurch gekennzeichnet, dass** der Leistungspfad zwischen der Antriebsquelle und den Fahrzeugachsen (29, 30) zum bedarfsgerechten und betriebszustandabhängigen Verteilen des Antriebsmomentes der Antriebsquelle zwischen den Fahrzeugachsen (29, 30) mit einer Einrichtung (22) ausgebildet ist, die bei Vorliegen einer Drehzahldifferenz zwischen den Fahrzeugachsen (29, 30) über ein Pumpensystem (32A) einen hydraulischen Druck aufbaut, mit dem miteinander in Reibeingriff bringbare Reibelemente (32B) derart beaufschlagbar sind, dass auf die beiden Fahrzeugachsen (29, 30) jeweils ein die Differenzdrehzahl reduzierendes Drehmoment aufbringbar ist.

20. Antriebsstrang nach einem der Ansprüche 17 bis 19, **dadurch gekennzeichnet, dass** in dem Leistungspfad einer Fahrzeugachse (29 oder 30) zum bedarfsgerechten und betriebszustandabhängigen Verteilen des einer Fahrzeugachse (29 oder 30) zugeführten Anteils des Antriebsmomentes in Fahrzeugquerrichtung zwischen zwei Antriebsrädern der Fahrzeugachse (29 oder 30) eine geregelte Differentialsperre (35) angeordnet ist.

21. Antriebsstrang nach einem der Ansprüche 17 bis 20, **dadurch gekennzeichnet, dass** der Leistungspfad einer Fahrzeugachse (29 oder 30) zum Verteilen des einer Fahrzeugachse (29 oder 30) zugeführten Anteils des Antriebsmomentes in Fahrzeugquerrichtung zwischen zwei Antriebsrädern der Fahrzeugachse (29 oder 30) mit einem offenen Differential (33) ausgeführt ist.

## Claims

1. Gearbox device (1) for distributing a drive torque to at least two drive output shafts (7, 8), having at least two planetary gear sets (2, 3) each with at least three shafts, wherein in each case a first shaft (4 or 5) of a planetary gear set (2 or 3 respectively) is connected to a drive input shaft (6), and in each case one second shaft of a planetary gear set (2 or 3) constitutes one of the drive output shafts (7 or 8), and in each case one third shaft (9, 10) of the planetary gear sets (2, 3) is operatively connected to a brake (19, 20) such that a degree of distribution of the drive torque between the two drive output shafts (7, 8) varies as a function of the transmission capabilities of the brakes (19, 20), **characterized in that** an activatable operative connection (11) is provided between the two third shafts (9, 10) of the first and second planetary gear sets (2, 3), which operative connection is formed with a third planetary gear set (23).

2. Gearbox device (1) according to Claim 1, **characterized in that** the first shaft (4) of the first planetary gear set (2) and the first shaft (5) of the second planetary gear set (3) are formed as an internal gear.

3. Gearbox device according to Claim 1 or 2, **characterized in that** the second shaft (7) of the first planetary gear set (2) and the second shaft (8) of the second planetary gear set (3) are formed as planet carriers.

4. Gearbox device according to one of Claims 1 to 3, **characterized in that** the third shaft (9) of the first planetary gear set (2) and the third shaft (10) of the second planetary gear set (3) are formed as sun gears.

5. Gearbox device according to one of Claims 1 to 4, **characterized in that** the third shaft (9) of the first planetary gear set (2) can be connected to a first shaft (24) of the third planetary gear set (23).

6. Gearbox device according to one of Claims 1 to 5, **characterized in that** the third shaft (10) of the second planetary gear set (3) can be connected to a third shaft (25) of the third planetary gear set (23).

7. Gearbox device according to one of Claims 1 to 6, **characterized in that** the operative connection (11) between the third shaft (9) of the first planetary gear set (2) and the third shaft (10) of the second planetary gear set (3) can be activated by means of a clutch (22) arranged between the third shaft (9) of the first planetary gear set (2) and the first shaft (24) of the third planetary gear set (23) or the third shaft (10) of the second planetary gear set (3) and the third shaft (25) of the third planetary gear set (23).

8. Gearbox device according to one of Claims 1 to 7, **characterized in that** a second shaft (27) of the third planetary gear set (23) is formed so as to be fixed with respect to a housing.

9. Gearbox device according to one of Claims 1 to 8, **characterized in that** the first shaft (24) of the third planetary gear set (23) is formed as an internal gear.

10. Gearbox device according to one of Claims 1 to 9, **characterized in that** the second shaft (27) of the third planetary gear set (23) is formed as a planet carrier.

11. Gearbox device according to one of Claims 1 to 10, **characterized in that** the third shaft (25) of the third planetary gear set (23) is formed as a sun gear.

12. Method for controlling and regulating a gearbox device (1) according to one of the preceding claims, wherein for the distribution of a drive torque of a drive source between the two drive output shafts (7, 8) of the gearbox device (1), the transmission capabilities of the two brakes (19, 20) are adjusted, **characterized in that** the adjustment of the brakes takes place such that one brake (19 or 20) is closed and the transmission capability of the other brake (20 or 19 respectively) is varied between a lower limit value (W(u)) and an upper limit value (W(o)) which preferably corresponds to a closed state of the brakes (k_VA, k_HA).

13. Method according to Claim 12, **characterized in that**, if the transmission capability of the brakes (19, 20) is presently at the lower limit value (W(u)), substantially no torque is supported by the brakes (19, 20), and in the closed state of the brakes (19, 20), a torque applied to a brake (19 or 20) is fully supported.

14. Method according to Claim 12 or 13, **characterized in that**, if a transmission capability of a brake (19 or 20) is presently at a value corresponding to the lower limit value (W(u)), substantially no drive torque is conducted to the drive output shaft (7 or 8) of a planetary gear set (2 or 3) assigned to said brake (19 or 20), and **in that** the drive torque, which is applied to the gearbox device (1), of the drive source is transmitted substantially entirely to the drive output shaft (8 or 7), which is assigned to the simultaneously closed brake (20 or 19), of the other planetary gear set (3 or 2).

15. Method according to one of Claims 12 to 14, **characterized in that** a degree of distribution of the drive torque between the two drive output shafts (7, 8) is varied as a function of the transmission capability of the brake (19 or 20) whose transmission capability is varied.

16. Drivetrain (28) of a vehicle having at least two drivable vehicle axles (29, 30) and having at least one gearbox device (1) according to one of the preceding Claims 1 to 11, wherein the gearbox device (1) is arranged in a power path between a drive source and the vehicle axles (29, 30), and by means of said gearbox device the drive torque of the drive source is distributed between the vehicle axles (29, 30) according to demand and as a function of the operating state, **characterized in that** the gearbox device (1) has three planetary gear sets (2, 3, 23).

17. Drivetrain (28) of a vehicle having at least two drivable vehicle axles (29, 30) and having at least one gearbox device (1) according to one of the preceding Claims 1 to 11, wherein the gearbox device (1) is arranged in a power path of a vehicle axle (29 or 30), and by means of said gearbox device that fraction of the drive torque which is supplied to the vehicle axle (29 or 30) is distributed in the vehicle transverse direction between two drive wheels of the vehicle axle (29, 30) according to demand and as a function of the operating state, **characterized in that** the gearbox device (1) has three planetary gear sets (2, 3, 23).

18. Drivetrain according to Claim 16, **characterized in that** the power path between the drive source and the vehicle axles (29, 30) is formed with a regulable clutch (22) by means of which the drive torque of the drive source is distributed between the vehicle axles (29, 30) according to demand and as a function of the operating state.

19. Drivetrain according to Claim 16, **characterized in that** the power path between the drive source and the vehicle axles (29, 30) is formed with a device (22) by means of which the drive torque of the drive source is distributed between the vehicle axles (29, 30) according to demand and as a function of the operating state, which device, in the presence of a rotational speed difference between the vehicle axles (29, 30), builds up a hydraulic pressure by means of a pump system (32A), with which hydraulic pressure friction elements (32B) which can be placed in frictional engagement with one another can be acted on such that a torque which reduces the rotational speed difference can be imparted in each case to the two vehicle axles (29, 30).

20. Drivetrain according to one of Claims 17 to 19, **characterized in that**, in the power path of a vehicle axle (29 or 30), there is arranged a regulated differential lock (35) by means of which that fraction of the drive torque which is supplied to a vehicle axle (29 or 30) is distributed in the vehicle transverse direction between two drive wheels of the vehicle axle (29 or 30) according to demand and as a function of the operating state.

21. Drivetrain according to one of Claims 17 to 20, **characterized in that** the power path of a vehicle axle (29 or 30) is formed with an open differential (33) by means of which that fraction of the drive torque which is supplied to a vehicle axle (29 or 30) is distributed in the vehicle transverse direction between two drive wheels of the vehicle axle (29 or 30).

## Revendications

1. Dispositif de transmission (1) destiné à répartir un couple d'entraînement à au moins deux arbres de sortie (7, 8) comprenant au moins deux trains planétaires (2, 3) à au moins trois arbres, un premier arbre (4 ou 5) d'un train planétaire (2 ou 3) étant à chaque fois raccordé à un arbre d'entraînement (6) et un deuxième arbre d'un train planétaire (2 ou 3) constituant à chaque fois l'un des arbres de sortie (7 ou 8) et un troisième arbre (9, 10) des trains planétaires (2, 3) étant à chaque fois en liaison fonctionnelle avec un frein (19, 20), de telle sorte qu'un degré de répartition du couple d'entraînement entre les deux arbres de sortie (7, 8) varie en fonction des capacités de transmission des freins (19, 20), **caractérisé en ce qu'**entre les deux troisièmes arbres (9, 10) des premier et deuxième trains planétaires (2, 3) est prévue une liaison fonctionnelle commutable (11) qui est réalisée avec un troisième train planétaire (23).

2. Dispositif de transmission selon la revendication 1, **caractérisé en ce que** le premier arbre (4) du premier train planétaire (2) et le premier arbre (5) du deuxième train planétaire (3) sont réalisés sous forme de couronne.

3. Dispositif de transmission selon la revendication 1 ou 2, **caractérisé en ce que** le deuxième arbre (7) du premier train planétaire (2) et le deuxième arbre (8) du deuxième train planétaire (3) sont réalisés sous forme de porte-satellites.

4. Dispositif de transmission selon l'une quelconque des revendications 1 à 3, **caractérisé en ce que** le troisième arbre (9) du premier train planétaire (2) et le troisième arbre (10) du deuxième train planétaire (3) sont réalisés sous forme de roue solaire.

5. Dispositif de transmission selon l'une quelconque des revendications 1 à 4, **caractérisé en ce que** le troisième arbre (9) du premier train planétaire (2) peut être relié à un premier arbre (24) du troisième train planétaire (23).

6. Dispositif de transmission selon l'une quelconque des revendications 1 à 5, **caractérisé en ce que** le troisième arbre (10) du deuxième train planétaire (3) peut être connecté à un troisième arbre (25) du troisième train planétaire (23).

7. Dispositif de transmission selon l'une quelconque des revendications 1 à 6, **caractérisé en ce que** la liaison fonctionnelle (11) entre le troisième arbre (9) du premier train planétaire (2) et le troisième arbre (10) du deuxième train planétaire (3) peut être commutée par le biais d'un embrayage (22) disposé entre le troisième arbre (9) du premier train planétaire (2) et le premier arbre (24) du troisième train planétaire (23) ou le troisième arbre (10) du deuxième train planétaire (3) et le troisième arbre (25) du troisième train planétaire (23).

8. Dispositif de transmission selon l'une quelconque des revendications 1 à 7, **caractérisé en ce qu'**un deuxième arbre (27) du troisième train planétaire (23) est réalisé de manière fixée au boîtier.

9. Dispositif de transmission selon l'une quelconque des revendications 1 à 8, **caractérisé en ce que** le premier arbre (24) du troisième train planétaire (23) est réalisé sous forme de couronne.

10. Dispositif de transmission selon l'une quelconque des revendications 1 à 9, **caractérisé en ce que** le deuxième arbre (27) du troisième train planétaire (23) est réalisé sous forme de porte-satellites.

11. Dispositif de transmission selon l'une quelconque des revendications 1 à 10, **caractérisé en ce que** le troisième arbre (25) du troisième train planétaire (23) est réalisé sous forme de roue solaire.

12. Procédé de commande et de régulation d'un dispositif de transmission (1) selon l'une quelconque des revendications précédentes, dans lequel, pour la répartition d'un couple d'entraînement d'une source d'entraînement entre les deux arbres de sortie (7, 8) du dispositif de transmission (1), les capacités de transfert des deux freins (19, 20) sont ajustées, **caractérisé en ce que** l'ajustement des freins s'effectue de telle sorte qu'un frein (19 ou 20) soit fermé et que la capacité de transfert de l'autre frein (20 ou 19) varie entre une valeur limite inférieure (W(u)) et une valeur limite supérieure (W(o)), qui correspond de préférence à un état fermé des freins (k_VA, k_HA).

13. Procédé selon la revendication 12, **caractérisé en ce que**, lorsque l'on est en présence de la valeur limite inférieure (W(u)) de la capacité de transfert des freins (19, 20), essentiellement aucun couple n'est supporté par les freins (19, 20), et dans l'état fermé des freins (19, 20), un couple s'appliquant sur un frein (19 ou 20) est complètement supporté.

14. Procédé selon la revendication 12 ou 13, **caractérisé en ce que** lorsque l'on est en présence d'une capacité de transfert d'un frein (19 ou 20), qui correspond à la valeur limite inférieure (W(u)), aucun couple d'entraînement n'est essentiellement guidé vers l'arbre de sortie (7 ou 8) d'un train planétaire (2 ou 3) qui est associé à ce frein (19 ou 20), et **en ce que** le couple d'entraînement de la source d'entraînement appliqué au dispositif de transmission (1) est essentiellement complètement guidé vers l'arbre de sortie (8 ou 7), associé au frein simultanément fermé (20 ou 19), de l'autre train planétaire (3 ou 2).

15. Procédé selon l'une quelconque des revendications 12 à 14, **caractérisé en ce qu'**un degré de répartition du couple d'entraînement entre les deux arbres de sortie (7, 8) est varié en fonction de la capacité de transfert des freins (19 ou 20), dont la capacité de transfert est modifiée.

16. Chaîne cinématique (28) d'un véhicule, comprenant deux essieux de véhicule entraînables (29, 30) et au moins un dispositif de transmission (1) selon l'une quelconque des revendications précédentes 1 à 11, dans laquelle le dispositif de transmission (1) est disposé dans un chemin de puissance entre une source d'entraînement et les essieux du véhicule (29, 30) en vue de répartir, de manière correspondant aux besoins et dépendant de l'état de fonctionnement, le couple d'entraînement de la source d'entraînement entre les essieux du véhicule (29, 30), **caractérisée en ce que** le dispositif de transmission (1) présente trois trains planétaires (2, 3, 23).

17. Chaîne cinématique (28) d'un véhicule comprenant au moins deux essieux de véhicule entraînables (29, 30) et au moins un dispositif de transmission (1) selon l'une quelconque des revendications précédentes 1 à 11, dans laquelle le dispositif de transmission (1) est disposé dans un chemin de puissance d'un essieu du véhicule (29 ou 30) en vue de répartir, de manière correspondant aux besoins et dépendant de l'état de fonctionnement, la proportion du couple d'entraînement acheminée à l'essieu du véhicule (29 ou 30) dans la direction transversale du véhicule entre deux roues motrices de l'essieu du véhicule (29 ou 30), **caractérisée en ce que** le dispositif de transmission (1) présente trois trains planétaires (2, 3, 23).

18. Chaîne cinématique selon la revendication 16, **caractérisée en ce que** le chemin de puissance est réalisé entre la source d'entraînement et les essieux du véhicule (29, 30) en vue de répartir, de manière correspondant aux besoins et dépendant de l'état de fonctionnement, le couple d'entraînement de la source d'entraînement entre les essieux du véhicule (29, 30), avec un embrayage réglable (22).

19. Chaîne cinématique selon la revendication 16, **caractérisée en ce que** le chemin de puissance entre la source d'entraînement et les essieux du véhicule (29, 30), en vue de répartir, de manière correspondant aux besoins et dépendant de l'état de fonctionnement, le couple d'entraînement de la source d'entraînement entre les essieux du véhicule (29, 30), avec un dispositif (22) qui, lorsque l'on est en présence d'une différence de régime entre les essieux du véhicule (29, 30), augmente une pression hydraulique par le biais d'un système de pompe (32A), ladite pression hydraulique sollicitant des éléments de friction (32B) pouvant être amenés en engagement par friction l'un avec l'autre de telle sorte qu'un couple réduisant la différence de régime puisse être à chaque fois appliqué sur les deux essieux du véhicule (29, 30).

20. Chaîne cinématique selon l'une quelconque des revendications 17 à 19, **caractérisé en ce que**, dans le chemin de puissance d'un essieu du véhicule (29 ou 30), en vue de répartir, de manière correspondant aux besoins et dépendant de l'état de fonctionnement, la proportion du couple d'entraînement acheminée à un essieu du véhicule (29 ou 30), dans la direction transversale du véhicule entre deux roues motrices de l'essieu du véhicule (29 ou 30), on dispose un dispositif de blocage différentiel régulé (35).

21. Chaîne cinématique selon l'une quelconque des revendications 17 à 20, **caractérisée en ce que** le chemin de puissance d'un essieu du véhicule (29 ou 30), en vue de répartir la proportion du couple d'entraînement acheminée à un essieu du véhicule (29 ou 30), dans la direction transversale du véhicule entre deux roues motrices de l'essieu du véhicule (29 ou 30), est réalisé avec un différentiel ouvert (33).
